(19) Europäisches Patentamt / European Patent Office / Office européen des brevets

(11) **EP 4 653 279 A1**

(12) **EUROPEAN PATENT APPLICATION**
published in accordance with Art. 153(4) EPC

(43) Date of publication:
**26.11.2025 Bulletin 2025/48**

(21) Application number: **23925951.8**

(22) Date of filing: **29.08.2023**

(51) International Patent Classification (IPC):
**B60W 30/06** (2006.01)

(52) Cooperative Patent Classification (CPC):
**B62D 15/0285; B60W 30/06; B60W 40/00**

(86) International application number:
**PCT/CN2023/115498**

(87) International publication number:
**WO 2024/183247 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.03.2023 CN 202310203858**

(71) Applicant: **Guangzhou Automobile Group Co., Ltd.**
**Guangzhou, Guangdong 511434 (CN)**

(72) Inventor: **ZHOU, Wenli**
**Guangzhou, Guangdong 511434 (CN)**

(74) Representative: **Metida**
**Gyneju str. 16**
**01109 Vilnius (LT)**

(54) **PATH PLANNING METHOD, SYSTEM AND APPARATUS FOR AUTOMATICALLY PARKING IN VERTICAL PARKING SPACE, STORAGE MEDIUM, AND VEHICLE**

(57) The present invention discloses a path planning method for automatic parking in a perpendicular parking space, and the method includes steps: detecting a positional relationship and distance between a center point of a rear axle of a current vehicle and a longitudinal centerline of a target perpendicular parking space; determining a corresponding optimal parking pattern according to the positional relationship and distance between the center point and the longitudinal centerline, where the optimal parking pattern includes at least: a first herringbone parking pattern, a second herringbone parking pattern, and a C-shaped parking pattern; and automatically parking the vehicle in the target perpendicular parking space according to the optimal parking pattern. The present invention further provides a system, an apparatus, a storage medium, and a vehicle associated therewith. The present invention can shorten a total parking time and improve parking efficiency.

```
                                                               ┌─ S10
┌──────────────────────────────────────────────────────────────┐
│ Detect a positional relationship and distance between a       │
│ center point of a rear axle of a current vehicle and a        │
│ longitudinal centerline of a target perpendicular parking     │
│ space                                                          │
└──────────────────────────────────────────────────────────────┘
                             │
                             ▼                                 ┌─ S11
┌──────────────────────────────────────────────────────────────┐
│ Determine a corresponding optimal parking pattern according   │
│ to the positional relationship and distance between the       │
│ center point and the longitudinal centerline                  │
└──────────────────────────────────────────────────────────────┘
                             │
                             ▼                                 ┌─ S12
┌──────────────────────────────────────────────────────────────┐
│ Automatically park the vehicle in the target perpendicular    │
│ parking space according to the optimal parking pattern        │
└──────────────────────────────────────────────────────────────┘
```

FIG. 1

## Description

This application claims priority to Chinese Patent Application No. 202310203858.7, filed with the Chinese Patent Office on March 3, 2023 and entitled "PATH PLANNING METHOD, SYSTEM AND APPARATUS FOR AUTOMATIC PARKING IN PERPENDICULAR PARKING SPACE, STORAGE MEDIUM AND VEHICLE ASSOCIATED THEREWITH", which is incorporated herein by reference in its entirety.

## FIELD OF TECHNOLOGY

The present invention relates to that technical field of path planning in automatic parking, and specifically, to a path planning method, system and apparatus for automatic parking in a perpendicular parking space, a storage medium and a vehicle associated therewith.

## BACKGROUND

In an automatic parking technology, a parking space was identified only by ultrasonic perception in the early days. Therefore, the parking space can be found only after the vehicle fully traverses the parking space. A path planning algorithm made based on such identification generally includes two steps: the vehicle reverses straight and then turns right to complete reversing. This method is called C-shaped parking.

Subsequently, an integrated automatic parking technology with camera perception emerges. The vehicle can identify the parking space in advance without fully traversing the parking space. On this basis, the path parking planning can be carried out, including two steps: the vehicle turns left to go forward and then reverses. This method is called herringbone parking.

However, in the existing automatic parking process, a fixed parking path is generally adopted and cannot be adjusted according to the environment not to minimize the parking path, so the parking time is long and the parking efficiency is not good.

## SUMMARY

A technical problem to be solved by the present invention is to provide a path planning method, system and apparatus for automatic parking in a perpendicular parking space, a storage medium and a vehicle associated therewith, which can shorten the total parking time and improve the parking efficiency.

In order to solve the above technical problem, one aspect of the present invention provides a path planning method for automatic parking in a perpendicular parking space, and the method includes at least the following steps:

detecting a positional relationship and distance between a center point of a rear axle of a current vehicle and a longitudinal centerline of a target perpendicular parking space, where the positional relationship is a front-rear relationship between the center point of a rear axle and the longitudinal centerline in a heading direction of the vehicle; determining a corresponding optimal parking pattern according to the positional relationship and distance between the center point and the longitudinal centerline, where the optimal parking pattern includes at least a first herringbone parking pattern, a second herringbone parking pattern, and a C-shaped parking pattern; and automatically parking the vehicle in the target perpendicular parking space according to the optimal parking pattern.

The determining a corresponding optimal parking pattern according to the positional relationship and distance between the center point and the longitudinal centerline further includes:

comparing the positional relationship with the distance, where the distance is a perpendicular distance between the center point of a rear axle and the longitudinal centerline; and
if the center of a rear axle is located behind the longitudinal centerline in the heading direction of the current vehicle and the distance is greater than a first threshold distance, determining that a current optimal parking pattern is the first herringbone parking pattern; or
if the center of a rear axle is located in front of the longitudinal centerline and the distance is greater than a second threshold distance, determining that a current optimal parking pattern is the C-shaped parking pattern, and the first threshold distance is smaller than the second threshold distance; or
if the center of a rear axle is located behind the longitudinal centerline and the distance is less than or equal to a first threshold distance; or the center of a rear axle is located in front of the longitudinal centerline and the distance is less than or equal to a second threshold distance, determining that a current optimal parking pattern is the second herringbone parking pattern.

The automatically parking the vehicle in the target perpendicular parking space according to the optimal parking pattern further includes:

when the determined optimal parking pattern is the first herringbone parking pattern, controlling the vehicle to drive straight ahead, so that the center point of a rear axle thereof reaches the first threshold distance;
rotating a steering wheel in a first direction, so that the front of the vehicle turns in a direction away from the target perpendicular parking space and drives to a calculated predetermined position;
rotating the steering wheel in an opposite direction to reverse and turn the vehicle until a longitudinal axle of the vehicle coincides with or is parallel to the longitudinal centerline; and
straightening the steering wheel and continuing to reverse the vehicle to park the vehicle in the parking space.

The automatically parking the vehicle in the target perpendicular parking space according to the optimal parking pattern further includes:

when the determined optimal parking pattern is the second herringbone parking pattern, rotating a steering wheel in a first direction, so that the front of the vehicle turns forward in a direction away from the target perpendicular parking space and drives to a calculated predetermined position;
rotating the steering wheel in an opposite direction to reverse and turn the vehicle until a longitudinal axle of the vehicle coincides with or is parallel to the longitudinal centerline; and
straightening the steering wheel and continuing to reverse the vehicle to park the vehicle in the parking space.

The automatically parking the vehicle in the target perpendicular parking space according to the optimal parking pattern further includes:

when the determined optimal parking pattern is the C-shaped parking pattern, controlling the vehicle to drive straight, so that the distance between the center point of a rear axle thereof on a second side and the longitudinal centerline reaches a minimum reversing radius;
rotating a steering wheel in a second direction, so that the rear of the vehicle reverses and turns in a direction approaching the target perpendicular parking space until a longitudinal axle of the vehicle coincides with or is parallel to the longitudinal centerline; and
straightening the steering wheel and continuing to reverse the vehicle to park the vehicle in the parking space.

The first threshold distance L0 is determined by the following formula:

$$L0 = (2^{\wedge}0.2 - 1) * R;$$

and

the second threshold distance L1 is determined by the following formula:

$$L1 = R - 0.15m;$$

where R denotes a minimum turning radius of the vehicle;
the predetermined position is calculated in real time by an automatic parking planning apparatus of the vehicle according to a current environment; and
the vehicle turns forward and reverses and turns at the minimum turning radius in a parking process.

Accordingly, the present invention provides a path planning system for automatic parking in a perpendicular parking space, and the system includes at least:

a relative position detection unit, configured to detect a positional relationship and distance between a center point of a rear axle of a current vehicle and a longitudinal centerline of a target perpendicular parking space, where the positional relationship is a front-rear relationship between the center point of a rear axle and the longitudinal centerline in a heading direction of the vehicle;
an optimal parking pattern determining unit, configured to determine an optimal parking pattern corresponding to the distance according to the positional relationship and distance between the center point and the longitudinal centerline, where the optimal parking pattern includes at least a first herringbone parking pattern, a second herringbone parking pattern, and a C-shaped parking pattern; and

a parking processing unit, configured to automatically park the vehicle in the target perpendicular parking space according to the optimal parking pattern.

The relative position detection unit further includes:

a position detection unit, configured to: detect the positional relationship and distance between the center point of a rear axle of a current vehicle and the longitudinal centerline of a target perpendicular parking space, and determine that, in the heading direction of the vehicle, the center of a rear axle is located behind the longitudinal centerline or in front of the longitudinal centerline; and

a distance calculation unit, configured to: calculate a perpendicular distance between the center point of a rear axle and the longitudinal centerline, and determine the perpendicular distance as the distance between the center point of a rear axle and the longitudinal centerline.

The optimal parking pattern determining unit further includes:

a threshold comparison unit, configured to compare the positional relationship and distance between the center of a rear axle and the longitudinal centerline with a first threshold distance located behind the longitudinal centerline and a second threshold distance located in front of the longitudinal centerline; and

a determining unit, configured to: if the comparison result of the threshold comparison unit is that the center of a rear axle is located behind the longitudinal centerline and the distance is greater than the first threshold distance, determine that a current optimal parking pattern is the first herringbone parking pattern; or

if the comparison result of the threshold comparison unit is that the center of a rear axle is located in front of the longitudinal centerline and the distance is greater than the second threshold distance, determine that a current optimal parking pattern is the C-shaped parking pattern; or

if the comparison result of the threshold comparison unit is that the center of a rear axle is located behind the longitudinal centerline and the distance is less than or equal to the first threshold distance; or if the comparison result of the threshold comparison unit is that the center of a rear axle is located in front of the longitudinal centerline and the distance is less than or equal to the second threshold distance, determine that a current optimal parking pattern is the second herringbone parking pattern.

The parking processing unit further includes:

a first parking processing unit, configured to: when the determined optimal parking pattern is the first herringbone parking pattern, control the vehicle to drive straight ahead, so that the center point of a rear axle thereof reaches the first threshold distance; rotate a steering wheel in a first direction, so that the front of the vehicle turns in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a second parking processing unit, configured to: when the determined optimal parking pattern is the second herringbone parking pattern, rotate a steering wheel in a first direction, so that the front of the vehicle turns forward in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a third parking processing unit, configured to: when the determined optimal parking pattern is the C-shaped parking pattern, control the vehicle to drive straight, so that the distance between the center point of a rear axle thereof on a second side and the longitudinal centerline reaches a minimum reversing radius; rotate the steering wheel in a second direction, so that the rear of the vehicle reverses and turns in a direction approaching the target perpendicular parking space until a longitudinal axle of the vehicle coincides with or is parallel to the longitudinal centerline; and straighten the steering wheel and continue to reverse the vehicle to park the vehicle in the parking space.

The first threshold distance L0 satisfies $L0 = (2^{0.2} - 1)*R$; and

the second threshold distance L1 satisfies $L1 = R - 0.15m$;

wherein R denotes a minimum turning radius of the vehicle;

the predetermined position is calculated in real time by an automatic parking planning apparatus of the vehicle according to a current environment; and

the vehicle turns forward and reverses and turns at the minimum turning radius in a parking process.

Another aspect of the present invention further provides a computer-readable storage medium on which a computer program is stored, where when the computer program is executed by a processor, the steps of the method are implemented.

Still another aspect of the present invention further provides a computing apparatus, where the computing apparatus includes a memory, a processor, and a computer program that is stored in the memory and executable on the processor, where when the computer program is executed by the processor, the steps of the method are implemented.

Still yet another aspect of the present invention further provides a vehicle provided with at least an automatic parking planning apparatus thereon, where the path planning system for automatic parking in a perpendicular parking space as previously mentioned is deployed in the automatic parking planning apparatus.

The embodiments of the present invention have the following beneficial effects:

The present invention provides a path planning method, system and apparatus for automatic parking in a perpendicular parking space, a storage medium and a vehicle associated therewith. t the corresponding optimal parking pattern is determined by detecting the positional relationship and distance between a center point of a rear axle of a current vehicle and a longitudinal centerline of a target perpendicular parking space and according to the positional relationship and distance; and the herringbone parking pattern and the C-shaped parking pattern can be adaptively selected as a first planning orientation, thereby shortening a total path length and improving the parking efficiency.

## BRIEF DESCRIPTION OF THE DRAWINGS

In order to more clearly explain embodiments of the present invention or the technical solution in the prior art, the accompanying drawings needed in the descriptions of the embodiments or the prior art will be briefly introduced below. Apparently, the accompanying drawings in the following descriptions are merely some embodiments of the present invention. Other accompany drawings, obtained by ordinary persons skilled in the art based on these drawings without any creative labor, still fall within the scope of the present invention.

FIG. 1 shows a schematic diagram of a main step of a path planning method for automatic parking in a perpendicular parking space according to an embodiment of the present invention;

FIG. 2 shows a schematic diagram of a positional relationship between a vehicle and the parking space in FIG. 1;

FIG. 3 shows a schematic diagram of parking in a first herringbone parking pattern according to the present invention;

FIG. 4 shows a schematic diagram of parking in a second herringbone parking pattern according to the present invention;

FIG. 5 shows a schematic diagram of parking in a C-shaped parking pattern according to the present invention;

FIG. 6 shows a schematic diagram of verification of a parking distance in a first scenario according to the present invention;

FIG. 7 shows a schematic diagram of verification of a parking distance in a second scenario according to the present invention;

FIG. 8 shows a structural schematic diagram of a path planning system for automatic parking in a perpendicular parking space according to an embodiment of the present invention;

FIG. 9 shows a structural schematic diagram of a relative position detection unit in FIG. 8;

FIG. 10 shows a structural schematic diagram of an optimal parking pattern determining unit in FIG. 8; and

FIG. 11 shows a structural schematic diagram of a parking processing unit in FIG. 8.

## DESCRIPTION OF THE EMBODIMENTS

In order to make the purpose, technical solution and advantages of the present invention more clear, the present invention will be further described in detail with the accompanying drawings.

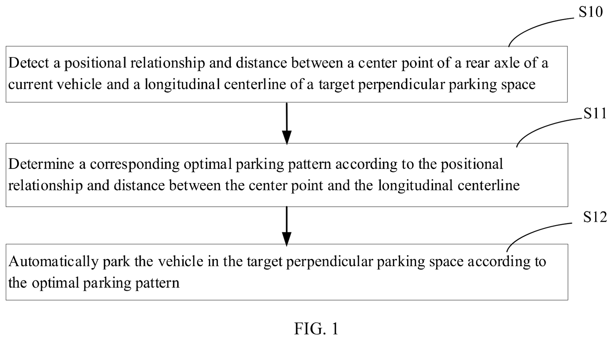

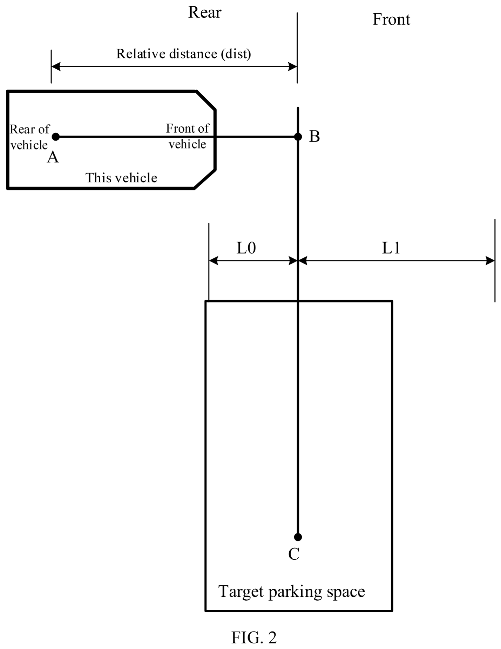

FIG. 1 shows a schematic diagram of a main step of a path planning method for automatic parking in a perpendicular parking space according to an embodiment of the present invention. With reference to FIG. 2 to FIG. 8, in this embodiment, the method includes at least the following steps:

Step S10. Detecting a positional relationship and distance between a center point of a rear axle of a current vehicle and a longitudinal centerline of a target perpendicular parking space.

In a specific example, the Step S10 specifically includes:

detecting the positional relationship between a center point of a rear axle of a current vehicle and a longitudinal centerline of a target perpendicular parking space, where the positional relationship is a front-rear relationship between the center point of a rear axle and the longitudinal centerline in a heading direction of the vehicle, to be specific, the center point of a rear axle is located behind the longitudinal centerline or in front of the longitudinal centerline. As shown in FIG. 2, the center of a rear axle is a point A and the longitudinal centerline of the target perpendicular parking space is BC. Taking the heading direction as a pointing direction, the point A is behind the centerline.

calculating a perpendicular distance between the center point of a rear axle and the longitudinal centerline as a relative distance (dist) between the center point of a rear axle and the longitudinal centerline, where a distance between AB shown in FIG. 2 is the relative distance between the center point of a rear axle and the longitudinal centerline.

Step S11. Determining a corresponding optimal parking pattern according to the positional relationship and distance between the center point and the longitudinal centerline.

In an example of the present invention, the Step S11 further includes:

Step S110. Comparing the positional relationship and distance, and comparing the positional relationship and distance between the center point and the longitudinal centerline with a first threshold distance and a second threshold distance. In FIG. 2, the first threshold distance is represented by L0, and the second threshold distance is represented by L1. In this embodiment, a value of the first threshold distance L0 is L0 = (2^0.2 - 1)*R, and a value of the second threshold distance L1 is L1 = R - 0.15m, where R denotes a minimum turning radius of the vehicle.

Step S111. If the center point of a rear axle of a current vehicle is located behind the longitudinal centerline in the heading direction of the current vehicle and the distance is greater than the first threshold distance (namely, beyond L0 in the rear), determining that a current optimal parking pattern is a first herringbone parking pattern; or

if the center of a rear axle of a current vehicle is located in front of the longitudinal centerline and the distance is greater than the second threshold distance (namely, beyond L1 in the front), determining that a current optimal parking pattern is a C-shaped parking pattern; or

if the vehicle is beyond these situations, that is, if the center of a rear axle is located behind the longitudinal centerline and the distance is less than or equal to the first threshold distance; or the center of a rear axle is located in front of the longitudinal centerline and the distance is less than or equal to the second threshold distance (namely, between L0 and L1), determining that a current optimal parking pattern is a second herringbone parking pattern;

It can be understood that the herringbone parking pattern here means that an overall parking path is like a herringbone, and the C-shaped parking pattern means that an overall parking path is like a C-shape.

Step S12. Automatically parking the vehicle in the target perpendicular parking space according to the optimal parking pattern.

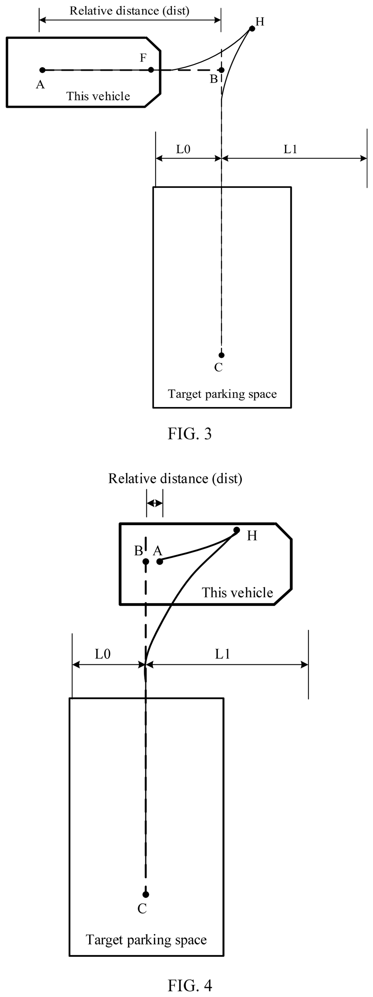

The following will introduce three optimal parking patterns with reference to FIG. 3 to FIG. 5.

In an example shown in FIG. 3, since the center A of a rear axle of a vehicle is located on a left side of L0, the determined optimal parking pattern is the first herringbone parking pattern. Specifically, in this example, the Step S12 further includes:

controlling the vehicle to drive straight ahead, so that the center point of a rear axle thereof reaches the first threshold distance; and in FIG. 3, allowing the center point of a rear axle to coincide with point F;

rotating a steering wheel in a first direction (left rotation as shown in FIG. 3), so that the front of the vehicle turns in a direction away from the target perpendicular parking space and drives to a calculated predetermined position (point H), where the predetermined position is calculated in real time by the automatic parking planning apparatus of the vehicle according to the current environment;

rotating the steering wheel in an opposite direction (right rotation) to reverse and turn the vehicle until a longitudinal axle of the vehicle coincides with or is parallel to the longitudinal centerline; and

straightening the steering wheel and continuing to reverse the vehicle to park the vehicle in the parking space.

It can be understood that the vehicle turns forward and reverses and turns at the minimum turning radius in a parking process.

In an example shown in FIG. 4, since the distance between the center A of a rear axle of a vehicle and the longitudinal centerline BC is between L0 and L1, the determined optimal parking pattern is the second herringbone parking pattern. Specifically, in this example, the Step S12 further includes:

rotating the steering wheel in the first direction (left rotation as shown in FIG. 4), so that the front of the vehicle turns forward in a direction away from the target perpendicular parking space and drives to a calculated predetermined position (H), where the predetermined position is obtained by real-time calculation of the automatic parking planning apparatus of the vehicle according to the current environment;

rotating the steering wheel in an opposite direction (right rotation) to reverse and turn the vehicle until a longitudinal axle of the vehicle coincides with or is parallel to the longitudinal centerline; and

straightening the steering wheel and continuing to reverse the vehicle to park the vehicle in the parking space.

It can be understood that the vehicle turns forward and reverses and turns at the minimum turning radius in a parking process.

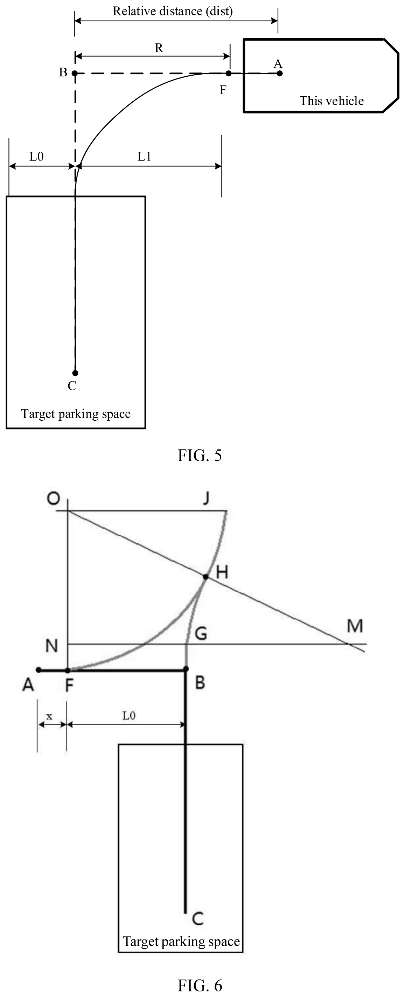

In an example shown in FIG. 5, since the center A of a rear axle of a vehicle is located on a right side of L1, the determined optimal parking pattern is the C-shaped parking pattern. Specifically, in this example, the Step S12 further includes:

controlling the vehicle to drive straight (forward or backward), so that the distance between the center point of a rear axle thereof on a second side and the longitudinal centerline reaches a minimum reversing radius; and in FIG. 5, allowing the center point of a rear axle to coincide with point F;

rotating a steering wheel in a second direction (right rotation as shown in FIG. 5), so that the rear of the vehicle reverses and turns in a direction approaching the target perpendicular parking space until a longitudinal axle of the vehicle coincides with or is parallel to the longitudinal centerline; and

straightening the steering wheel and continuing to reverse the vehicle to park the vehicle in the parking space.

It can be understood that the vehicle turns forward and reverses and turns at the minimum turning radius in a parking process.

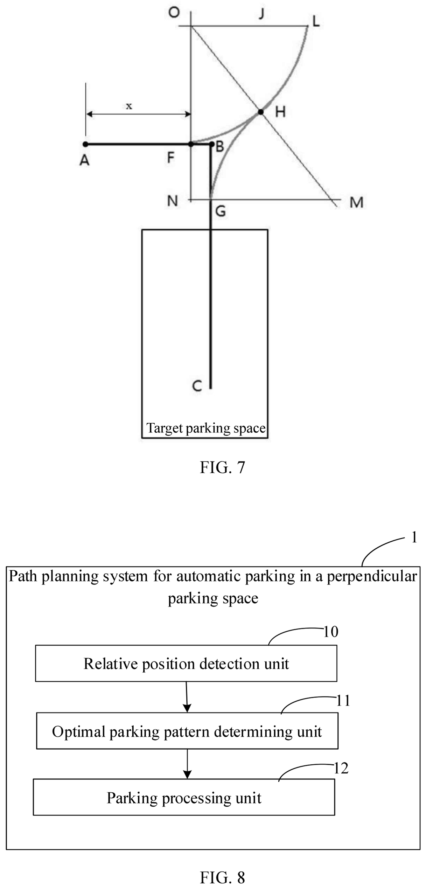

Referring to FIG. 6 and FIG. 7, a parking path in the parking patterns provided by the method of the present invention can be verified to determine whether the parking path is the shortest. The following will make descriptions by taking the first herringbone parking pattern as an example, and two situations in which the parking pattern is adopted are described.

When the condition of the first herringbone parking pattern is met, whether the total path length of the parking path provided by the present invention reaches a minimum length is verified.

As shown in FIG. 6, it is assumed that the length of AB is R and the length of BC is 2*R, R denotes the minimum turning radius of the vehicle.

It is assumed that the vehicle drives straight ahead from point A for x meters (0 <= x <= 2*R), turns left to point H with the minimum turning radius, turns right to point G with the minimum turning radius, and finally reverses straight to end point C. Now, a relationship between the total path length and x is solved.

As shown in the following figures, a vehicle heading angle changes by pi/4, so the total length of arc FH and arc HG is just a quarter of an arc.

Total path length:

$$LEN = AF + pi*R/2 + GC$$

$$= AF + pi*R/2 + BC + OF - ON$$

$$= AF + pi*R/2 + 2*R + R - (OM^2 - MN^2)^0.5$$

$$= x + pi*R/2 + 3*R - ((2*R)^2 - (2*R - x)^2)^0.5$$

$$= x + pi*R/2 + 3*R - (4*R*x - x^2)^0.5$$

FIG. 6 shows a situation where x is a small value.

For the situation in the figure, when a value of x is large, an expression of the total path length LEN can be derived through the following derivation process.

A derivative of LEN for x is as follows:

$$d(LEN)/d(x) = 1 - 0.5\,(4*R*x - x^2)^{\wedge}(-0.5) * (4*R - 2*x)$$

$$= 1 - (2*R - x) / ((4*R*x - x^2)^{\wedge}0.5)$$

$$d(LEN)/d(x) = 0$$

$$(2*R - x) = (4*R*x - x^2)^{\wedge}0.5$$

$$(2*R - x)^{\wedge}2 = 4*R*x - x^2$$

$$x^2 - 4*R*x + 2*R^2 = 0$$

$$0 <= x <= 2*R$$

$$x = (2 - 2^{\wedge}0.5)*R.$$

As can be seen from the above, in the formula of d(LEN)/d(x):

numerator 2*R - x monotonically decreases over [0, 2*R]; and
denominator (4*R*x - x^2)^0.5 monotonically increases over [0, 2*R];

Therefore, when 0 < = x < (2 - 2^0.5)*R, d(LEN)/d(x) is negative and LEN monotonously decreases.
When X = (2 - 2^0.5)*R, d(LEN)/d(x) is zero and LEN reaches a minimum value; and
when (2 - 2^0.5)*R < x < 2*R, d(LEN)/d(x) is positive, and LEN increases monotonically.
Therefore, when x = (2 - 2^0.5)*R, LEN reaches a minimum value, and x = AF.
The first threshold satisfies L0 = FB = AB - AF = R - R = (2 - 2^0.5) * R = (2^0.2 - 1)*R.
As can be seen from the above, the herringbone parking pattern provided by the present invention makes a parking path in a corresponding section shortest. It can be understood that in a similar way, it is easy to verify that a total parking path corresponding to the second herringbone parking pattern is the shortest in a corresponding section. In addition, the C-shaped parking pattern provided by the present invention is that the vehicle drives straight and reverses and turns at a minimum turning radius. Undoubtedly, this parking path is the shortest in the corresponding section.

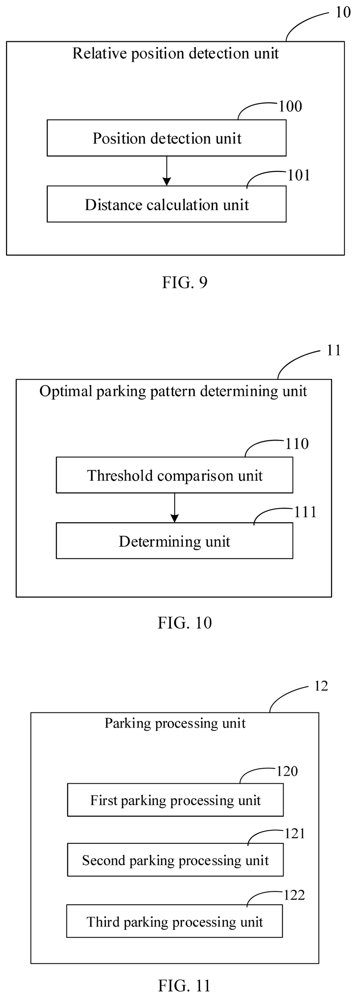

FIG. 8 shows a path planning system for automatically parking in a perpendicular parking space provided by the present invention. With reference to FIG. 9 to FIG. 11, in this embodiment, the path planning system 1 for automatically parking in a perpendicular parking space includes at least:

a relative position detection unit 10, configured to detect a positional relationship and distance between a center point of a rear axle of a current vehicle and a longitudinal centerline of a target perpendicular parking space, where the positional relationship is a front-rear relationship between the center point of a rear axle and the longitudinal centerline in a heading direction of the vehicle;
an optimal parking pattern determining unit 11, configured to determine an optimal parking pattern corresponding to the distance according to the positional relationship and distance between the center point and the longitudinal centerline, where the optimal parking pattern includes at least a first herringbone parking pattern, a second herringbone parking pattern, and a C-shaped parking pattern; and
a parking processing unit 12, configured to automatically park the vehicle in the target perpendicular parking space according to the optimal parking pattern.

As shown in FIG. 9, specifically, the relative position detection unit 10 further includes:

a position detection unit 100, configured to: detect the positional relationship and distance between the center point of a rear axle of a current vehicle and the longitudinal centerline of a target perpendicular parking space, and determine that, in the heading direction of the vehicle, the center of a rear axle is located behind the longitudinal centerline or in front of the longitudinal centerline; and
a distance calculation unit 101, configured to: calculate a perpendicular distance between the center point of a rear axle and the longitudinal centerline, and determine the perpendicular distance as the distance between the center point of a rear axle and the longitudinal centerline.

As shown in FIG. 10, specifically, the optimal parking pattern determining unit 11 further includes:

a threshold comparison unit 110, configured to compare the positional relationship and distance between the center point of a rear axle and the longitudinal centerline with a first threshold distance located behind the longitudinal centerline and a second threshold distance located in front of the longitudinal centerline; and

a determining unit 111, configured to: if the comparison result of the threshold comparison unit is that the center of a rear axle is located behind the longitudinal centerline and the distance is greater than the first threshold distance, determine that a current optimal parking pattern is the first herringbone parking pattern; or

if the comparison result of the threshold comparison unit is that the center of a rear axle of a current vehicle is located in front of the longitudinal centerline and the distance is greater than the second threshold distance, determine that a current optimal parking pattern is the C-shaped parking pattern and the second threshold distance is greater than the first threshold distance; or

if the comparison result of the threshold comparison unit is that the center of a rear axle is located behind the longitudinal centerline and the distance is less than or equal to the first threshold distance; or if the comparison result of the threshold comparison unit is that the center of a rear axle is located in front of the longitudinal centerline and the distance is less than or equal to the second threshold distance, determine that a current optimal parking pattern is the second herringbone parking pattern.

As shown in FIG. 11, specifically, the parking processing unit 12 further includes:

a first parking processing unit 120, configured to: when the determined optimal parking pattern is the first herringbone parking pattern, control the vehicle to drive straight ahead, so that the center point of a rear axle thereof reaches the first threshold distance; rotate a steering wheel in a first direction, so that the front of the vehicle turns in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a second parking processing unit 121, configured to: when the determined optimal parking pattern is the second herringbone parking pattern, rotate a steering wheel in a first direction, so that the front of the vehicle turns forward in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a third parking processing unit 122, configured to: when the determined optimal parking pattern is the C-shaped parking pattern, control the vehicle to drive straight, so that the distance between the center point of a rear axle thereof on a second side and the longitudinal centerline reaches a minimum reversing radius; rotate the steering wheel in a second direction, so that the rear of the vehicle reverses and turns in a direction approaching the target perpendicular parking space until a longitudinal axle of the vehicle coincides with or is parallel to the longitudinal centerline; and straighten the steering wheel and continue to reverse the vehicle to park the vehicle in the parking space.

The first threshold distance L0 satisfies $L0 = (2^{0.2} - 1)*R$; and

the second threshold distance L1 satisfies $L1 = R - 0.15m$;
where R denotes a minimum turning radius of the vehicle;
the predetermined position is calculated in real time by an automatic parking planning apparatus of the vehicle according to a current environment; and
the vehicle turns forward and reverses and turns at the minimum turning radius in a parking process.

For more details, reference to the foregoing descriptions of FIG. 1 to FIG. 8 is made. The details are not described herein again.

Another aspect of the present invention further provides a computer-readable storage medium on which a computer program is stored, where when the computer program is executed by a processor, the steps of the method as described in FIG. 1 to FIG. 7 are implemented. For more details, reference to the foregoing descriptions of FIG. 1 to FIG. 7 is made. The details are not described herein again.

Still another aspect of the present invention further provides a computing apparatus, where the computing apparatus includes a memory, a processor, and a computer program that is stored in the memory and executable on the processor, where when the computer program is executed by a processor, the steps of the method as described in FIG. 1 to FIG. 7 are implemented. For more details, reference to the foregoing descriptions of FIG. 1 to FIG. 7 is made. The details are not described herein again. In a specific application, the computing apparatus may be a chip for automatic parking planning and parking processing in a vehicle.

Still yet another aspect of the present invention further provides a vehicle provided with at least an automatic parking planning apparatus thereon, where the path planning system for automatic parking in a perpendicular parking space as described in FIG. 8 to FIG. 11 is deployed in the automatic parking planning apparatus. For more details, reference to the foregoing descriptions of FIG. 8 to FIG. 11 is made. The details are not described herein again.

The embodiments of the present invention have the following beneficial effects:

The present invention provides a path planning method, system and apparatus for automatic parking in a perpendicular parking space, a storage medium and a vehicle associated therewith. The positional relationship and distance between a center point of a rear axle of a current vehicle and a longitudinal centerline of a target perpendicular parking space is detected to determine the corresponding optimal parking pattern is determined by detecting the positional relationship and distance between a center point of a rear axle of a current vehicle and a longitudinal centerline of a target perpendicular parking space and according to this positional relationship and distance; and the herringbone parking pattern and the C-shaped parking pattern can be adaptively selected as a first planning orientation, thereby shortening a total path length and improving the parking efficiency.

It should be understood by those skilled in the art that embodiments of the present invention can provide a method, an apparatus, or a computer program product. Therefore, a full hardware embodiment, a full software embodiment, or a software-hardware combined embodiment can be used in the present invention. Moreover, a computer program product implemented on one or more computer-usable storage media (including but not limited to disk memory, CD-ROM, and optical memory) including computer-usable program code can be used in the present invention.

The present invention is described with reference to a flowchart of a method, a block diagram of a device (system), and a flowchart and/or block diagram of a computer program product according to the embodiments of the present invention. It should be understood that each step and/or block in the flowchart and/or block diagram, and a combination of the step and/or block in the flowchart and/or block diagram can be implemented by computer program instructions. These computer program instructions may be provided for a processor of a general-purpose computer, special-purpose computer, an embedded processing unit or other programmable data processing apparatus to generate a machine, so that the instructions executed by the processor of the computer or other programmable data processing apparatus generate an apparatus for implementing one or more steps in the flowchart and/or functions specified in one block or multiple blocks in the block diagram.

The above disclosure is only a preferred embodiment of the present invention, and certainly cannot be used to limit the scope of the present invention, so the equivalent changes made according to the claims of the present invention still fall within the scope of the present invention.

## Claims

1. A path planning method for automatic parking in a perpendicular parking space, comprising at least the following steps:

   detecting a positional relationship and distance between a center point of a rear axle of a current vehicle and a longitudinal centerline of a target perpendicular parking space, wherein the positional relationship is a front-rear relationship between the center point of a rear axle and the longitudinal centerline in a heading direction of the vehicle;
   determining a corresponding optimal parking pattern according to the positional relationship and distance between the center point and the longitudinal centerline, wherein the optimal parking pattern comprises at least a first herringbone parking pattern, a second herringbone parking pattern, and a C-shaped parking pattern; and
   automatically parking the vehicle in the target perpendicular parking space according to the optimal parking pattern.

2. The method according to claim 1, wherein the determining a corresponding optimal parking pattern according to the positional relationship and distance between the center point and the longitudinal centerline further comprises:

   comparing the positional relationship with the distance, wherein the distance is a perpendicular distance between the center point of a rear axle and the longitudinal centerline; and
   if the center of a rear axle is located behind the longitudinal centerline in the heading direction of the current vehicle and the distance is greater than a first threshold distance, determining that a current optimal parking pattern is the first herringbone parking pattern; or

if the center of a rear axle is located in front of the longitudinal centerline and the distance is greater than a second threshold distance, determining that a current optimal parking pattern is the C-shaped parking pattern, and the second threshold distance is greater than the first threshold distance; or

if the center of a rear axle is located behind the longitudinal centerline and the distance is less than or equal to a first threshold distance; or the center of a rear axle is located in front of the longitudinal centerline and the distance is less than or equal to a second threshold distance, determining that a current optimal parking pattern is the second herringbone parking pattern.

3. The method according to claim 2, wherein the automatically parking the vehicle in the target perpendicular parking space according to the optimal parking pattern further comprises:

when the determined optimal parking pattern is the first herringbone parking pattern, controlling the vehicle to drive straight ahead, so that the center point of a rear axle thereof reaches the first threshold distance; rotating a steering wheel in a first direction, so that the front of the vehicle turns in a direction away from the target perpendicular parking space and drives to a calculated predetermined position; rotating the steering wheel in an opposite direction to reverse and turn the vehicle until a longitudinal axle of the vehicle coincides with or is parallel to the longitudinal centerline; and straightening the steering wheel and continuing to reverse the vehicle to park the vehicle in the parking space.

4. The method according to claim 2, wherein the automatically parking the vehicle in the target perpendicular parking space according to the optimal parking pattern further comprises:

when the determined optimal parking pattern is the second herringbone parking pattern, rotating a steering wheel in a first direction, so that the front of the vehicle turns forward in a direction away from the target perpendicular parking space and drives to a calculated predetermined position; rotating the steering wheel in an opposite direction to reverse and turn the vehicle until a longitudinal axle of the vehicle coincides with or is parallel to the longitudinal centerline; and straightening the steering wheel and continuing to reverse the vehicle to park the vehicle in the parking space.

5. The method according to claim 2, wherein the automatically parking the vehicle in the target perpendicular parking space according to the optimal parking pattern further comprises:

when the determined optimal parking pattern is the C-shaped parking pattern, controlling the vehicle to drive straight, so that the distance between the center point of a rear axle thereof on a second side and the longitudinal centerline reaches a minimum reversing radius; rotating a steering wheel in a second direction, so that the rear of the vehicle reverses and turns in a direction approaching the target perpendicular parking space until a longitudinal axle of the vehicle coincides with or is parallel to the longitudinal centerline; and straightening the steering wheel and continuing to reverse the vehicle to park the vehicle in the parking space.

6. The method according to any one of claims 2 to 5, wherein

the first threshold distance L0 is determined by the following formula:

$$L0 = (2^{\wedge}0.2 - 1)*R;$$

and
the second threshold distance L1 is determined by the following formula:

$$L1 = R - 0.15m;$$

wherein R denotes a minimum turning radius of the vehicle; the predetermined position is calculated in real time by an automatic parking planning apparatus of the vehicle according to a current environment; and the vehicle turns forward and reverses and turns at the minimum turning radius in a parking process.

7. A path planning system for automatic parking in a perpendicular parking space, comprising at least:

a relative position detection unit, configured to detect a positional relationship and distance between a center point of a rear axle of a current vehicle and a longitudinal centerline of a target perpendicular parking space, wherein the positional relationship is a front-rear relationship between the center point of a rear axle and the longitudinal centerline in a heading direction of the vehicle;

an optimal parking pattern determining unit, configured to determine an optimal parking pattern corresponding to the distance according to the positional relationship and distance between the center point and the longitudinal centerline, wherein the optimal parking pattern comprises at least a first herringbone parking pattern, a second herringbone parking pattern, and a C-shaped parking pattern; and

a parking processing unit, configured to automatically park the vehicle in the target perpendicular parking space according to the optimal parking pattern.

8. The system according to claim 7, wherein the relative position detection unit further comprises:

a position detection unit, configured to: detect the positional relationship and distance between the center point of a rear axle of a current vehicle and the longitudinal centerline of a target perpendicular parking space, and determine that, in the heading direction of the vehicle, the center of a rear axle is located behind the longitudinal centerline or in front of the longitudinal centerline; and

a distance calculation unit, configured to: calculate a perpendicular distance between the center point of a rear axle and the longitudinal centerline, and determine the perpendicular distance as the distance between the center point of a rear axle and the longitudinal centerline;

the optimal parking pattern determining unit further comprises:

a threshold comparison unit, configured to compare the positional relationship and distance between the center point of a rear axle and the longitudinal centerline with a first threshold distance located behind the longitudinal centerline and a second threshold distance located in front of the longitudinal centerline; and

a determining unit, configured to: if the comparison result of the threshold comparison unit is that the center of a rear axle is located behind the longitudinal centerline and the distance is greater than the first threshold distance, determine that a current optimal parking pattern is the first herringbone parking pattern; or

if the comparison result of the threshold comparison unit is that the center of a rear axle is located in front of the longitudinal centerline and the distance is greater than the second threshold distance, determine that a current optimal parking pattern is the C-shaped parking pattern and the second threshold distance is greater than the first threshold distance; or

if the comparison result of the threshold comparison unit is that the center of a rear axle is located behind the longitudinal centerline and the distance is less than or equal to the first threshold distance; or if the comparison result of the threshold comparison unit is that the center of a rear axle is located in front of the longitudinal centerline and the distance is less than or equal to the second threshold distance, determine that a current optimal parking pattern is the second herringbone parking pattern.

9. The system according to claim 8, wherein the parking processing unit further comprises:

a first parking processing unit, configured to: when the determined optimal parking pattern is the first herringbone parking pattern, control the vehicle to drive straight ahead, so that the center point of a rear axle thereof reaches the first threshold distance; rotate a steering wheel in a first direction, so that the front of the vehicle turns in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a second parking processing unit, configured to: when the determined optimal parking pattern is the second herringbone parking pattern, rotate a steering wheel in a first direction, so that the front of the vehicle turns forward in a direction away from the target perpendicular parking space and drives to a calculated predetermined position; rotate the steering wheel in an opposite direction to reverse and turn the vehicle until a longitudinal axle of the vehicle coincides with or is parallel to the longitudinal centerline; and straighten the steering wheel and continue to reverse the vehicle to park the vehicle in the parking space; and

a third parking processing unit, configured to: when the determined optimal parking pattern is the C-shaped parking pattern, control the vehicle to drive straight, so that the distance between the center point of a rear axle thereof on a second side and the longitudinal centerline reaches a minimum reversing radius; rotate the steering wheel in a second direction, so that the rear of the vehicle reverses and turns in a direction approaching the target perpendicular parking space until a longitudinal axle of the vehicle coincides with or is parallel to the longitudinal centerline; and straighten the steering wheel and continue to reverse the vehicle to park the vehicle in the parking space.

10. A computer-readable storage medium on which a computer program is stored, wherein when the computer program is executed by a processor, the steps of the method according to any one of claims 1 to 6 are implemented.

11. A computing apparatus, comprising a memory, a processor, and a computer program that is stored in the memory and executable on the processor, wherein when the computer program is executed by the processor, the steps of the method according to any one of claims 1 to 6 are implemented.

12. A vehicle provided with at least an automatic parking planning apparatus thereon, wherein the path planning system for automatic parking in a perpendicular parking space according to any one of claims 7 to 9 is deployed in the automatic parking planning apparatus.

S10

Detect a positional relationship and distance between a center point of a rear axle of a current vehicle and a longitudinal centerline of a target perpendicular parking space

S11

Determine a corresponding optimal parking pattern according to the positional relationship and distance between the center point and the longitudinal centerline

S12

Automatically park the vehicle in the target perpendicular parking space according to the optimal parking pattern

FIG. 1

Rear                               Front

Relative distance (dist)

Rear of vehicle                Front of vehicle     B

A

This vehicle

L0          L1

C

Target parking space

FIG. 2

Relative distance (dist)

F

A

This vehicle

H

B

L0     L1

C

Target parking space

FIG. 3

Relative distance (dist)

B   A

H

This vehicle

L0     L1

C

Target parking space

FIG. 4

FIG. 5

FIG. 6

FIG. 7

FIG. 8

```
                                                              ┌─ 10
┌──────────────────────────────────────────────────────────┐
│           Relative position detection unit                 │
│                                             ┌─ 100          │
│        ┌──────────────────────────────────┐                │
│        │        Position detection unit   │                │
│        └──────────────────────────────────┘                │
│                         │                   ┌─ 101          │
│                         ▼                                   │
│        ┌──────────────────────────────────┐                │
│        │       Distance calculation unit  │                │
│        └──────────────────────────────────┘                │
└──────────────────────────────────────────────────────────┘
```

FIG. 9

```
                                                              ┌─ 11
┌──────────────────────────────────────────────────────────┐
│        Optimal parking pattern determining unit            │
│                                             ┌─ 110          │
│        ┌──────────────────────────────────┐                │
│        │       Threshold comparison unit  │                │
│        └──────────────────────────────────┘                │
│                         │                   ┌─ 111          │
│                         ▼                                   │
│        ┌──────────────────────────────────┐                │
│        │          Determining unit        │                │
│        └──────────────────────────────────┘                │
└──────────────────────────────────────────────────────────┘
```

FIG. 10

```
                                                              ┌─ 12
┌──────────────────────────────────────────────────────────┐
│               Parking processing unit                      │
│                                             ┌─ 120          │
│        ┌──────────────────────────────────┐                │
│        │     First parking processing unit│                │
│        └──────────────────────────────────┘                │
│                                             ┌─ 121          │
│        ┌──────────────────────────────────┐                │
│        │    Second parking processing unit│                │
│        └──────────────────────────────────┘                │
│                                             ┌─ 122          │
│        ┌──────────────────────────────────┐                │
│        │     Third parking processing unit│                │
│        └──────────────────────────────────┘                │
└──────────────────────────────────────────────────────────┘
```

FIG. 11

## INTERNATIONAL SEARCH REPORT

| International application No. |
|---|
| **PCT/CN2023/115498** |

**A. CLASSIFICATION OF SUBJECT MATTER**

B60W30/06(2006.01)i

According to International Patent Classification (IPC) or to both national classification and IPC

**B. FIELDS SEARCHED**

Minimum documentation searched (classification system followed by classification symbols)

IPC:B60W

Documentation searched other than minimum documentation to the extent that such documents are included in the fields searched

Electronic data base consulted during the international search (name of data base and, where practicable, search terms used)

CNABS, CNTXT, ENTXT, DWPI, CNKI: 中点, 中心, 垂直, 车位, 后轴, center, central, vertical position, rear, axle

**C. DOCUMENTS CONSIDERED TO BE RELEVANT**

| Category* | Citation of document, with indication, where appropriate, of the relevant passages | Relevant to claim No. |
|---|---|---|
| A | CN 109649382 A (BAIDU ONLINE NETWORK TECHNOLOGY (BEIJING) CO., LTD.) 19 April 2019 (2019-04-19) description, paragraphs 57-90, and figure 3 | 1-12 |
| A | CN 112758084 A (AIWAYS AUTOMOBILE CO., LTD.) 07 May 2021 (2021-05-07) entire document | 1-12 |
| A | CN 114044001 A (WUHAN LOTUS AUTOMOBILE CO., LTD.) 15 February 2022 (2022-02-15) entire document | 1-12 |
| A | CN 111754809 A (CHONGQING CHANG'AN AUTOMOBILE CO., LTD.) 09 October 2020 (2020-10-09) entire document | 1-12 |
| A | US 2018186407 A1 (HYUNDAI MOTOR CO., LTD. et al.) 05 July 2018 (2018-07-05) entire document | 1-12 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 October 2023** | **24 October 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/115498**

| Patent document cited in search report | | | Publication date (day/month/year) | Patent family member(s) | | | Publication date (day/month/year) |
|---|---|---|---|---|---|---|---|
| CN | 109649382 | A | 19 April 2019 | None | | | |
| CN | 112758084 | A | 07 May 2021 | None | | | |
| CN | 114044001 | A | 15 February 2022 | None | | | |
| CN | 111754809 | A | 09 October 2020 | None | | | |
| US | 2018186407 | A1 | 05 July 2018 | KR | 20180078981 | A | 10 July 2018 |
| | | | | KR | 101915165 | B1 | 06 November 2018 |
| | | | | EP | 3343436 | A1 | 04 July 2018 |
| | | | | EP | 3343436 | B1 | 06 April 2022 |
| | | | | US | 11155299 | B2 | 26 October 2021 |

Form PCT/ISA/210 (patent family annex) (July 2022)

# EP 4 653 279 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 202310203858